# EUROPEAN PATENT APPLICATION

(11) **EP 1 746 791 A1**
(43) Date of publication of application: **24.01.2007**
(21) Application number: 05739040.3
(22) Date of filing: 12.05.2005
(51) Int. Cl.: H04L 12/66

(54) **NETWORK ATTACK COMBATING METHOD, NETWORK ATTACK COMBATING DEVICE AND NETWORK ATTACK COMBATING PROGRAM**

(30) Priority: 12.05.2004 JP 2004142052
(71) Applicant: NIPPON TELEGRAPH AND TELEPHONE CORPORATION, Tokyo 100-8116 (JP)
(72) Inventor: Soejima, Yuji, Musashino-shi, Tokyo 1808585 (JP); Onishi, Masaki, Musashino-shi, Tokyo 1808585 (JP); Fuji, Hitoshi, Musashino-shi, Tokyo 1808585 (JP)
(74) Representative: Hoffmann, Klaus
(86) International application number: PCT/JP2005/008679
(87) International publication number: WO 2005/109797

(57) **Abstract**

When an attack is terminated, a mitigation measure against the attack is terminated. At this time, a network attack mitigation device determines whether there is a network attack mitigation device located on an attacker device than the own device and performing the mitigation measure against the attack in collaboration with the own device, or preparing for resume of the attack, thereby determining whether it is necessary to prepare for resume of the attack. According to this determination, when it is determined that it is not necessary to prepare for resume of the attack, the network attack mitigation device deletes the information relating to the attack and returns to a normal state. On the other hand, when it is determined that it is necessary to prepare for resume of the attack, the network attack mitigation device prepares for resume of the attack, without deleting the information relating to the attack.

## Description

### TECHNICAL FIELD

The present invention relates to a network attack mitigation method and a network attack mitigation device that defends against an attack using unnecessary packets made against a device on a network or with respect to the network, and a network attack mitigation program used for realizing the network attack mitigation method.

More specifically, the present invention relates to a technology, by which when a mitigation measure is taken against a network attack made by one or more terminals connected to the network by transmitting unnecessary packets to one or more other terminals and servers, for interrupting a service provided by a sender's terminal of a packet connected the network, and the mitigation measure against the attack is performed by a plurality of devices, the respective devices terminate the mitigation measure autonomously and converge the mitigation range.

### BACKGROUND ART

In the case of a network attack (DDoS attack) that includes sending unnecessary packets in a large amount, since malicious packets are transmitted from a plurality of points in the network, the network can be protected effectively by taking the mitigation measure against the attack at a plurality of points in the network.

Network attack mitigation systems, such as PeakFlow of Arbor Networks and MovingFirewall of NTT Corporation, use the above technique.

With the PeakFlow of Arbor Networks (for example, see Nonpatent Literature 1), the traffic is monitored at a plurality of points to detect a network attack. A mitigation measure is taken against the attack by a router, a defense device, or the like provided in the network.

In PeakFlow, however, when the attack is settled, a manager of the system needs to terminate the mitigation measure.

On the other hand, with the MovingFirewall of NTT Corporation, an attack is detected near a defense target, to shift a firewall function toward a plurality of attacking hosts, thereby enlarging the defended network.

In MovingFirewall, the respective devices in the network autonomously determine termination of the attack, to terminate the mitigation measure. In doing so, the attack information is held to prepare for resume of the attack. When all the devices finally determine that the attack is terminated, a management device that can get the information of all devices initializes respective devices and the attack information is deleted.

Thus, MovingFirewall, when the attack settles down, the respective devices are initialized, without depending on the system manager. The system manager can also issue a command of initialization of all devices. Nonpatent literature 1: PEAKFLOW SP, Internet URL:http://www.arbornetworks.com

### DISCLOSURE OF INVENTION

### PROBLEM TO BE SOLVED BY THE INVENTION

The MovingFirewall of NTT Corporation constructs an effective mitigation system against the DDoS attack; however, it requires a management device.

On the other hand, in some network attack mitigation devices, the system determines termination of the attack, and automatically returns to a normal state.

In such a system, there is a method by which when the respective devices independently terminates the mitigation measure against the attack, upon determination of termination of the attack by the respective devices, the attack information is immediately deleted.

When this method is used, however, there is a problem as follows. That is, if other devices continue to take the mitigation measure against the attack, since there is the possibility of resume of the attack, the device that does not hold the attack information at the time of resume of the attack cannot cope with the attack immediately. Therefore, this becomes a weak point of the system, and the attacking traffic, which should be prevented, flows into the protected network (hereinafter, "problem 1").

To cope with the attack immediately at the time of resume of the attack, therefore, there is a method of continuing to keep the information in the past.

However, if the information relating to the attack is kept, the past attack information will saturate, thereby oppressing detection processing and mitigation processing. Therefore, it is necessary to delete these pieces of information at a certain point in time. However, if this deletion processing is performed independently, there is a problem in that appropriate opportunity of deletion cannot be determined (hereinafter, "problem 2").

Furthermore, there is a method that the management system is installed to determine that the mitigation measure has been terminated in all devices, thereby performing final termination of the mitigation measure.

By this method, however, there is a problem in that the management device is required (hereinafter, "problem 3"). Furthermore, when the attack is resumed after the mitigation measure by the respective devices has been terminated, the information for coping with the attack immediately is not deleted until all the devices terminate the mitigation measure. Therefore, it is not sufficient as the solution for the problem 2.

The present invention has been achieved to solve the above problems. It is an object of the invention to provide a new network attack mitigation technology that enables termination processing of the mitigation measure against the attack, while solving these problems, when a plurality of network attack mitigation device, to which the present invention is applied, terminates the mitigation measure against the attack by autonomous determination by each device.

### MEANS FOR SOLVING PROBLEM

To solve the above problems and achieve the above objects, according to claim 1 of the present invention, a network attack mitigation method of defending an attack on network attack mitigation device from an attacker device that includes sending unnecessary packets performed against devices on a network or against the network, in collaboration with a plurality of other network attack mitigation devices, includes determining whether it is necessary to prepare for resume of the attack when a mitigation measure against the attack is terminated in response to the termination of the attack, based on whether a first network attack mitigation device located nearer to the attacker device than the network attack mitigation device is now performing a mitigation measure against the attack, or is preparing for resume of the attack, or has terminated the mitigation measure against the attack and returned to a normal state; deleting information relating to the attack and causing the network attack mitigation device to return to a normal state, when it is determined at the determining that it is not necessary to prepare for resume of the attack; and preparing for resume of the attack without deleting the information relating to the attack, when it is determined at the determining that it is necessary to prepare for resume of the attack.

According to claim 2 of the present invention, the determining includes determining whether it is necessary to prepare for resume of the attack according to whether there is the first network attack mitigation device located nearer the attacker device than the network attack mitigation device.

According to claim 3 of the present invention, the method further comprises notifying the information relating to the attack to other network attack mitigation device located nearer the attacker device than the network attack mitigation device as a mitigation measure against the attack. Moreover, the determining includes determining whether it is necessary to prepare for resume of the attack, based on whether the other network attack mitigation device, as a destination of the attack information, has returned to the normal state.

According to claim 4 of the present invention, the determining includes determining that it is not necessary to prepare for resume of the attack, when all other network attack mitigation devices, as destinations of the attack information, have returned to the normal state.

According to claim 5 of the present invention, the method further comprises notifying return to the normal state to the other network attack mitigation devices, as the destinations of the information relating to the attack, when the network attack mitigation device deletes the attack information and returns to the normal state. Moreover, upon reception of the notification indicating that the network attack mitigation device has returned to the normal state from all of other network attack mitigation devices as the destinations of the attack information, the determining includes determining that it is not necessary to prepare for resume of the attack.

According to claim 6 of the present invention, a network attack mitigation device that defends an attack from an attacker device of sending unnecessary packets performed against devices on a network or against the network, in collaboration with a plurality of other network attack mitigation devices includes a determination unit that determines whether it is necessary to prepare for resume of the attack when a mitigation measure against the attack is terminated in response to the termination of the attack, based on whether a first network attack mitigation device located nearer to the attacker device than the network attack mitigation device is now performing a mitigation measure against the attack, or is preparing for resume of the attack, or has terminated the mitigation measure against the attack and returned to a normal state; a return unit that deletes information relating to the attack and causes the network attack mitigation device to return to a normal state, when the determination unit determines that it is not necessary to prepare for resume of the attack; and a resume preparing unit that prepares for resume of the attack without deleting the information relating to the attack, when the determination unit determines that it is necessary to prepare for resume of the attack.

According to claim 7 of the present invention, in the network attack mitigation device, the determination unit determines whether it is necessary to prepare for resume of the attack according to whether there is the first network attack mitigation device located nearer the attacker device than the network attack mitigation device.

According to claim 8 of the present invention, the network attack mitigation device comprises an attack notification unit that notifies the information relating to the attack to other network attack mitigation device located nearer the attacker device than the network attack mitigation device as a mitigation measure against the attack. Moreover, the determination unit determines whether it is necessary to prepare for resume of the attack, based on whether the other network attack mitigation device, as a destination of the attack information, has returned to the normal state.

According to claim 9 of the present invention, in the network attack mitigation device, the determination unit determines that it is not necessary to prepare for resume of the attack, when all other network attack mitigation devices, as destinations of the attack information, have returned to the normal state.

According to claim 10 of the present invention, the network attack mitigation device comprises a return notification unit that notifies return to the normal state to the other network attack mitigation devices as the destinations of the information relating to the attack, when the network attack mitigation device deletes the attack information and returns to the normal state. Moreover, upon reception of the notification indicating that the network attack mitigation device has returned to the normal state from all of other network attack mitigation devices as the destinations of the attack information, the determination unit determines that it is not necessary to prepare for resume of the attack.

According to claim 11 of the present invention, a network attack mitigation program that implements a network attack mitigation method of defending an attack on network attack mitigation device from an attacker device that includes sending unnecessary packets performed against devices on a network or against the network, in collaboration with a plurality of other network attack mitigation devices causes the network attack mitigation device to execute determining whether it is necessary to prepare for resume of the attack when a mitigation measure against the attack is terminated in response to the termination of the attack, based on whether a first network attack mitigation device located nearer to the attacker device than the network attack mitigation device is now performing a mitigation measure against the attack, or is preparing for resume of the attack, or has terminated the mitigation measure against the attack and returned to a normal state; deleting information relating to the attack and causing the network attack mitigation device to return to a normal state, when it is determined at the determining that it is not necessary to prepare for resume of the attack; and preparing for resume of the attack without deleting the information relating to the attack, when it is determined at the determining that it is necessary to prepare for resume of the attack.

According to claim 12 of the present invention, in the network attack mitigation program, the determining includes determining whether it is necessary to prepare for resume of the attack according to whether there is the first network attack mitigation device located nearer the attacker device than the network attack mitigation device.

According to claim 13 of the present invention, the network attack mitigation program further causes the network attack mitigation device to execute notifying the information relating to the attack to other network attack mitigation device located nearer the attacker device than the network attack mitigation device as a mitigation measure against the attack. Moreover, the determining includes determining whether it is necessary to prepare for resume of the attack, based on whether the other network attack mitigation device, as a destination of the attack information, has returned to the normal state.

According to claim 14 of the present invention, in the network attack mitigation program, the determining includes determining that it is not necessary to prepare for resume of the attack, when all other network attack mitigation devices, as destinations of the attack information, have returned to the normal state.

According to claim 15 of the present invention, the network attack mitigation program further causes the network attack mitigation device to execute notifying return to the normal state to the other network attack mitigation devices, as the destinations of the information relating to the attack, when the network attack mitigation device deletes the attack information and returns to the normal state. Moreover, upon reception of the notification indicating that the network attack mitigation device has returned to the normal state from all of other network attack mitigation devices as the destinations of the attack information, the determining includes determining that it is not necessary to prepare for resume of the attack.

### EFFECT OF THE INVENTION

According to the invention of claim 1, 6, or 11, when the mitigation measure against the attack is terminated corresponding to the termination of the attack, it is determined whether it is necessary to prepare for resume of the attack, according to the situation whether the network attack mitigation device located on the attacker device than the own device is now taking the mitigation measure against the attack, prepares for resume of the attack, or terminates the mitigation measure against the attack and returns to the normal state. When it is determined that it is not necessary to prepare for resume of the attack, the information relating to the attack is deleted and the normal state is resumed. When it is determined that it is necessary to prepare for resume of the attack, preparation is made for resume of the attack without deleting the information relating to the attack. Accordingly, in a system for protecting the network by using a plurality of network attack mitigation devices, even if the respective devices autonomously determine termination of the attack and hence termination of the mitigation measure without using the management device, the mitigation range can be efficiently converged, while preparing for resume of the attack.

According to the invention of claim 2, 7, or 12, it is determined whether it is necessary to prepare for resume of the attack according to the presence of the network attack mitigation device located on the attacker device than the own device. Accordingly, even when there is no network attack mitigation device located on the attacker device than the own device, the mitigation range can be efficiently converged, while preparing for resume of the attack.

According to the invention of claim 3, 8, or 13, the attack information is notified to another network attack mitigation device located on the attacker device than the own device as the mitigation measure against the attack, and it is determined whether it is necessary to prepare for resume of the attack according to whether the other network attack mitigation device as the destination of the attack information returns to the normal state. Therefore, it can be efficiently determined whether to continue the mitigation measure against the attack, by determining whether to continue the mitigation measure against the attack being taken by the own device, based on whether the other network attack mitigation devices, to which notification of the attack is sent from the own device, have returned to the normal state. Accordingly, the mitigation range can be efficiently converged, while preparing for resume of the attack.

According to the invention of claim 4, 9, or 14, when all the other network attack mitigation devices as the destination of the attack information return to the normal state, it is determined that it is not necessary to prepare for resume of the attack. Therefore, when all the other network attack mitigation devices having been notified of the attack from the own device have returned to the normal state, that is, when it is detected that the own device is the forefront node closest to the attacker device, the mitigation measure against the attack can be terminated. Accordingly, the mitigation range can be efficiently converged.

According to the invention of claim 5, 10, or 15, when the attack information is deleted and the normal state is resumed, this matter is notified to the other network attack mitigation device, which is the notifier of the attack information. When it is notified from all the other network attack mitigation devices as the destination of the attack information that the devices have returned to the normal state, it is determined that it is not necessary to prepare for resume of the attack. Therefore, by using a return notification, it can be reliably confirmed that all the other network attack mitigation devices having notified of the attack from the own device have returned to the normal state. Accordingly, the mitigation range can be efficiently converged.

### BRIEF DESCRIPTION OF DRAWINGS

Fig. 1 is an example of defense of a victim in collaboration with a DDoS defense device;
Fig. 2 is an example of the configuration of the DDoS defense device according to the present invention;
Fig. 3 is an example of data structure of a malicious packet information database;
Fig. 4 is an example of data structure of a device collaboration control database;
Fig. 5 is an example of a processing flow executed by a packet dispatcher;
Fig. 6 is an example of a processing flow executed by an attack detection module;
Fig. 7 is an example of a processing flow executed by an attack mitigation module;
Fig. 8 is an example of a processing flow executed by a terminate/resume control;
Fig. 9 is an example of a processing flow executed by a device collaboration control; and
Fig. 10 is another example of a processing flow executed by the device collaboration control.

### EXPLANATIONS OF LETTERS OR NUMERALS

- 101: Network interface

- 102: Packet dispatcher
- 103: Attack detection module
- 104: Malicious packet information database
- 105: Attack mitigation module
- 106: Terminate/resume control
- 107: Device collaboration control
- 108: Device collaboration control database

### BEST MODE(S) FOR CARRYING OUT THE INVENTION

The processing when the present invention is applied to a network attack mitigation device will be explained. An explanation is given of a case that the mitigation measure against a particular attack is terminated, it is determined whether it is necessary to prepare for resume of the attack, according to whether the state of the network attack mitigation device is a "normal state" in which the network attack mitigation device has terminated the mitigation measure against the attack and has returned to the normal state. However, the present invention is not limited thereto, and it can be determined whether it is necessary to prepare for resume of the attack, according to whether the mitigation state is a "state in the middle of mitigation" in which the attack mitigation is now being executed, or a "resume preparation state" in which though the attack mitigation is terminated, the information relating to the attack is held.

The network attack mitigation device of the present invention collaborates with the other devices (network attack mitigation devices) to defend the network from a network attack. If the attack information is notified from another device, the network attack mitigation device stores the information of the device. When having detected an attack by the own device, the network attack mitigation device stores that the own device has detected the attack. At the time of notifying the attack information to another device, the network attack mitigation device stores to which device the notification has been sent.

When having determined that the attack traffic in the monitored network has settled down during the period in which the attack mitigation measure is being taken, the network attack mitigation device of the present invention terminates the attack mitigation.

At this time, when the attack information indicating that the attack traffic has settled down has been notified to another device, the network attack mitigation device keeps the attack information without deleting it, to prepare for resume of the attack.

On the other hand, if the attack information indicating that the attack traffic has settled down has not been notified to another device, the network attack mitigation device deletes the attack information and returns to the normal state.

At this time, when the attack information to be deleted is the information notified from another device, the network attack mitigation device notifies the other device that the attack has settled down and the attack information has been deleted (return notification to the normal state). When the attack information to be deleted has been detected by the own device, the network attack mitigation device need not notify the deletion of the attack information, and returns to the normal state.

Upon reception of the deletion notification of the attack information from another device, the network attack mitigation device of the present invention stores the information of the device that has notified the deletion. At this time, the network attack mitigation device checks whether the attack mitigation measure has been terminated in the own device, and whether the attack information deletion notification has been received from all other devices to which the own device has notified the attack information.

As a result of this check, if it is determined that the attack mitigation measure has not been terminated in the own device, the mitigation measure is continued. On the other hand, though the attack mitigation measure has been terminated in the own device, if there is any one device that has not yet sent the attack information deletion notification, the network attack mitigation device prepare for resume of the attack.

If the attack mitigation measure has been terminated in the own device, and the attack information deletion notifications have been received from all other devices to which the attack information has been sent from the own device, the network attack mitigation device deletes the attack information as well, and returns to the normal state.

At this time, when the attack information to be deleted is the information notified from another device, the network attack mitigation device notifies the device that the attack has settled down and the attack information has been deleted. When the attack information to be deleted is detected by the own device, it is not necessary to notify that the attack information has been deleted, and hence, the network attack mitigation device returns to the normal state.

According to this rule, even if the respective network attack mitigation devices of the present invention perform autonomous determination to terminate the attack mitigation measure by performing the termination processing of the attack mitigation measure, the range in which a device performing the attack mitigation measure and a device preparing for resume of the attack are present can be converged without forming a weak point in the protected network. When the attack is resumed, the device in course of convergence can immediately perform the mitigation measure against the attack, and the device notifies the attack information again to other devices, thereby enlarging the defense range.

Thus, according to the present invention, since the range, in which the device performing the attack mitigation and the device preparing for resume of the attack are present, can be flexibly changed in response to the attack, the possibility that the processing of respective devices is oppressed by saturation of the attack information becomes lower than that in the conventional art. Since the respective devices can perform autonomous determination to terminate the attack mitigation measure and return to the normal state, it is not necessary to provide a management device for realizing the processing.

The present invention will be explained below in detail with respect to embodiments.

### EMBODIMENTS

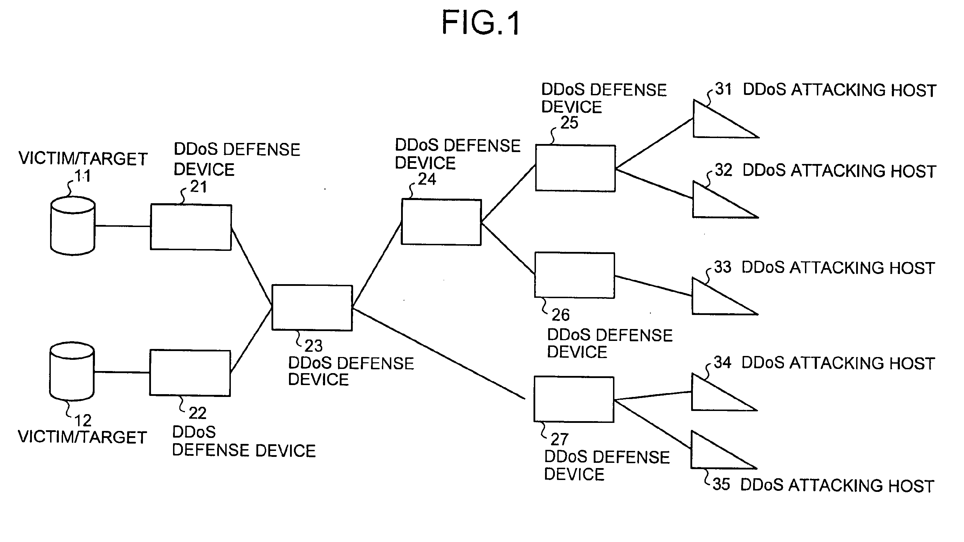

Fig. 1 is an example of connection for defending a victim in collaboration with a plurality of DDoS defense device at the time of occurrence of a DDoS attack, as an embodiment of the present invention.

In Fig. 1, DDoS attacking hosts 31 to 35 transmit malicious packets to victims 11 and 12. A plurality of DDoS defense devices 21 to 27 are connected between the respective DDoS attacking hosts 31 to 35 and the victims 11 and 12, and these DDoS defense devices 21 to 27 collaborate with each other to defend the victims 11 and 12 from the DDoS attack.

When the DDoS attack against the victims 11 and 12 occurs, specifically, these DDoS defense devices 21 to 27 organize a defense against the attack, starting from the DDoS defense devices 21 and 22 close to the victims 11 and 12, and extends the defense line toward the DDoS attacking hosts 31 to 35 in the following manner:
DDoS defense devices 21 and 22 → DDoS defense device 23 → DDoS defense device 24 → DDoS defense devices 25 and 26 → DDoS defense device 27.
   When the DDoS attack finishes, the defense against the attack is terminated from the DDoS defense devices 25 to 27 away from the victims 11 and 12, and the defense line is converged in the following manner:
DDoS defense devices 25 and 26 → DDoS defense device 24 → DDoS defense device 23
DDoS defense device 27 → DDoS defense device 23 → DDoS defense devices 21 and 22.

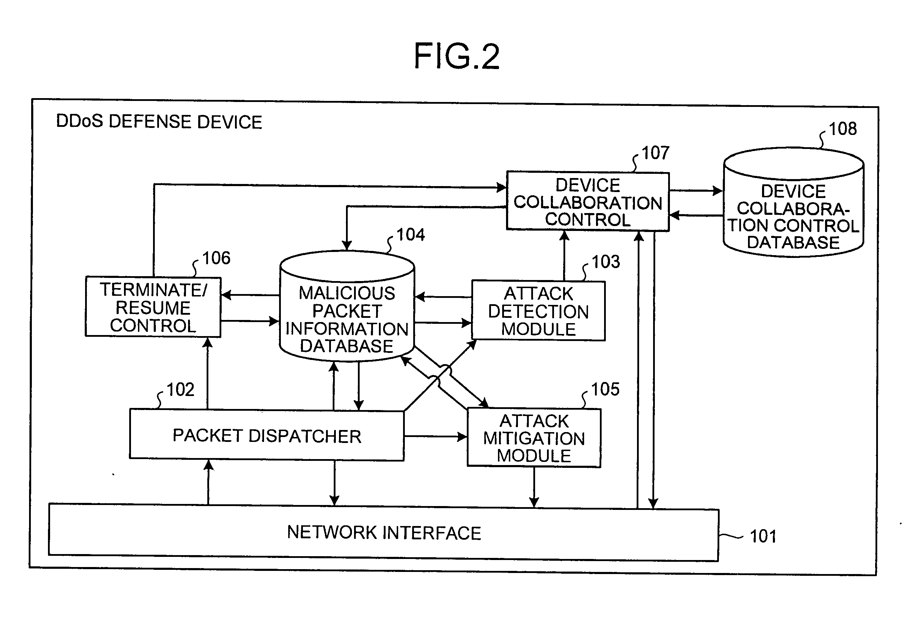

An example of the configuration of the DDoS defense devices 21 to 27 incorporating the present invention is shown in Fig. 2.

The DDoS defense devices 21 to 27 in the embodiment include a network interface 101, a packet dispatcher 102, an attack detection module 103, a malicious packet information database 104, an attack mitigation module 105, a terminate/resume control 106, a device collaboration control 107, and a device collaboration control database 108.

When the DDoS attack does not occur, upon reception of the packet by the network interface 101, the DDoS defense devices 21 to 27 transfer the packet to the network interface 101 via the packet dispatcher 102.

On the other hand, in the state of DDoS attack, upon reception of malicious packets by the network interface 101, the DDoS defense devices 21 to 27 transfer the packet to the network interface 101 via the terminate/resume control 106 and the attack detection module 103, with the packets being subjected to attack mitigation processing by the attack mitigation module 105. Accordingly, the victims 11 and 12 can be protected from the DDoS attack.

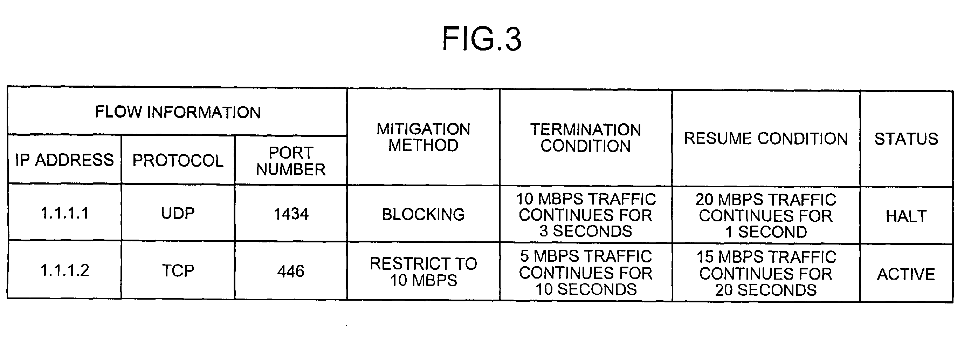

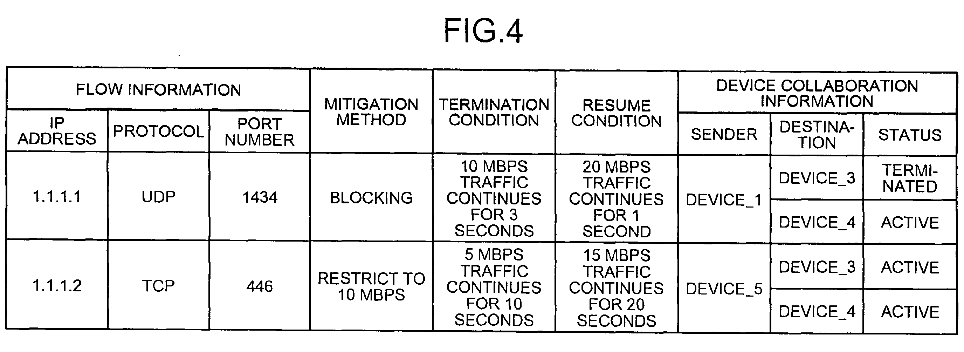

An example of the data structure of the malicious packet information database 104 is shown in Fig. 3, and an example of the data structure of the device collaboration control database 108 is shown in Fig. 4.

The malicious packet information database 104 is for controlling malicious packet information. As shown in Fig. 3, the mitigation method against the malicious packets, the condition for terminating the mitigation method, the condition for resume of the mitigation method, and status information indicating whether the mitigation method is active or halt (halt is equivalent to termination) are controlled in association with the flow information of the malicious packets.

The device collaboration control database 108 controls the collaboration information of the devices that execute the mitigation measure against the attack in collaboration with each other. As shown in Fig. 4, the information of the device that has transmitted the malicious packet information (information of the sender device), the information of the device that has received the malicious packet information (information of the destination device), and the status information of the destination device are controlled. The destination device includes the own device, and the status information of the own device is controlled according to the status information of the destination device.

For example, the device collaboration control database 108 shown in Fig. 4 is one example of the device collaboration control database 108 included in device "3", wherein it is controlled that malicious packet information is transmitted to the own device from the DDoS defense device, device "1", the malicious packet information is transmitted to the DDoS defense device, device "4" (the current status is "active"), and the own device is in a "terminated (halted)" state. The malicious packet information indicates that IP address is "1.1.1.1", the protocol is "UDP", the port number is "1434", the mitigation method is "blocking", the termination condition is "terminate the mitigation method when 10 megabits per second (Mbps) traffic continues for 3 seconds", the resume condition is "resume the mitigation method when 20 Mbps traffic continues for 1 second".

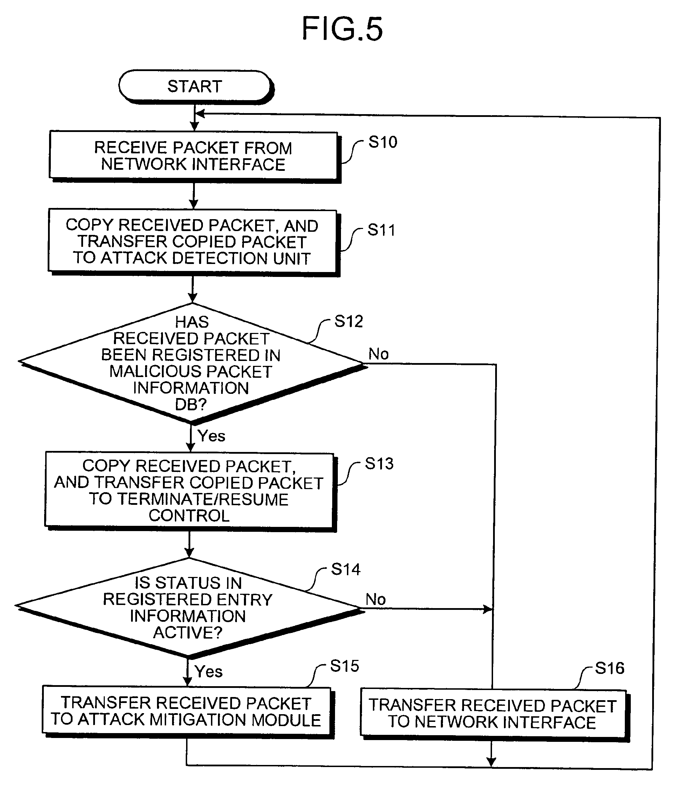

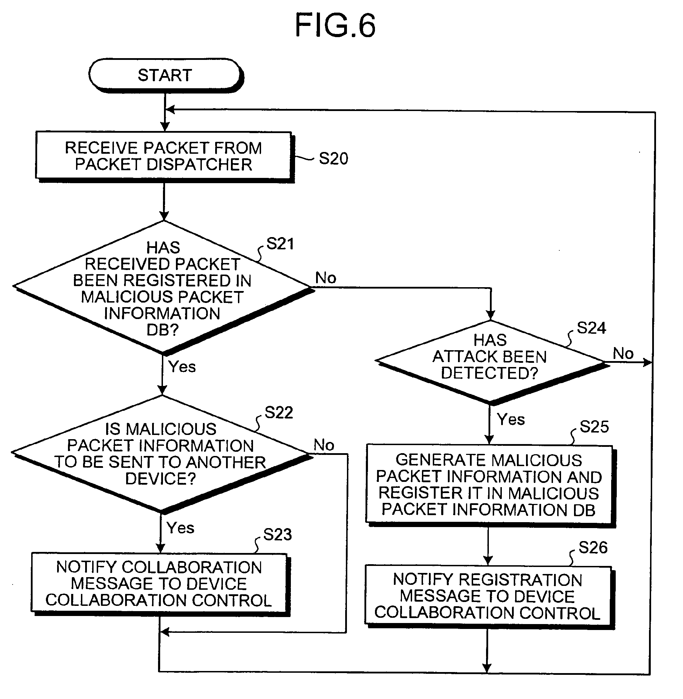

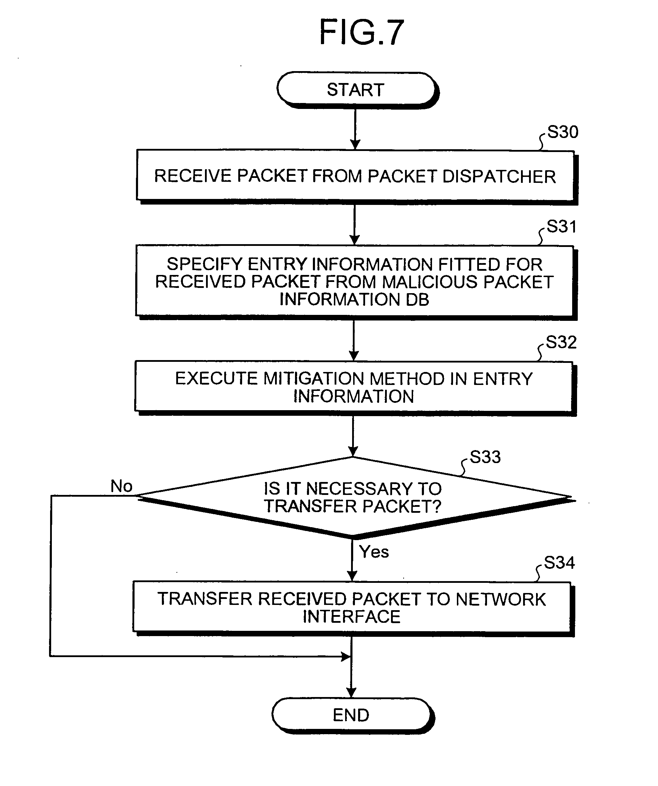

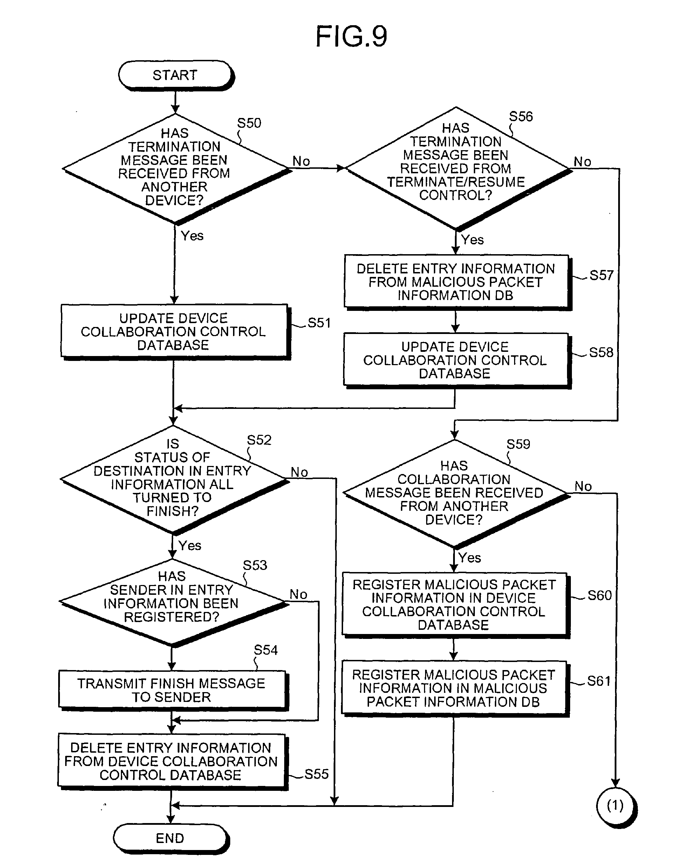

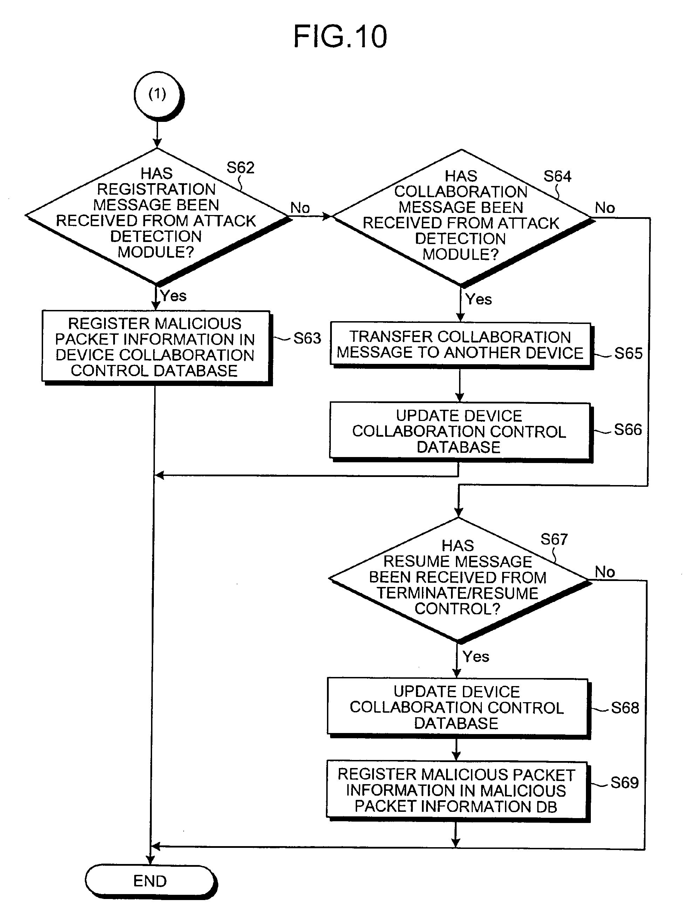

An example of a processing flow executed by the packet dispatcher 102 is shown in Fig. 5, an example of the processing flow executed by the attack detection module 103 is shown in Fig. 6, an example of the processing flow executed by the attack mitigation module 105 is shown in Fig. 7, an example of the processing flow executed by the terminate/resume control 106, and examples of the processing flow executed by the device collaboration control 107 are shown in Figs. 9 and 10.

The processing executed by the DDoS defense devices 21 to 27 having such a configuration will be specifically explained according to these processing flows.

The processing executed by the packet dispatcher 102 will be explained first according to the processing flow in Fig. 5.

As shown in the processing flow in Fig. 5, upon reception of the packet from the network interface 101 at step 10, the packet dispatcher 102 proceeds to step 11, to copy the received packet and transfer the copied packet to the attack detection module 103.

Subsequently at step 12, the packet dispatcher 102 determines whether the information of the received packet has been registered in the malicious packet information database 104.

When it is determined that the received packet has been registered in the malicious packet information database 104 according to the determination processing, the packet dispatcher 102 proceeds to step 13, to copy the received packet and transfer the copied packet to the terminate/resume control 106.

Subsequently at step 14, the packet dispatcher 102 determines whether the status information stored in entry information (entry information fitted for the received packet) registered in the malicious packet information database 104 indicates "active".

When it is determined that the status information registered in the entry information fitted for the received packet indicates "active", the packet dispatcher 102 proceeds to step 15 to transfer the received packet to the attack mitigation module 105, and returns to step 10.

On the other hand, when it is determined that the information of the received packet is not registered in the malicious packet information database 104 at step 12, the packet dispatcher 102 proceeds to step 16 to transfer the received packet to the network interface 101, and returns to step 10.

When it is determined that the status information registered in the entry information fitted for the received packet does not indicate "active" at step 14, that is, the status information indicates "halt", the packet dispatcher 102 proceeds to step 16 to transfer the received packet to the network interface 101, and returns to step 10.

Thus, upon reception of the packet from the network interface 101, the packet dispatcher 102 transfers the copy of the received packet to the attack detection module 103, and transfers the copy of the received packet to the terminate/resume control 106, transfers the received packet to the attack mitigation module 105, or transfers the received packet to the network interface 101, based on whether the received packet is the malicious packet stored in the malicious packet information database 104 or whether the attack mitigation measure is being executed.

The processing executed by the attack detection module 103 will be explained according to the processing flow in Fig. 6.

As shown in the processing flow in Fig. 6, upon reception of the packet from the packet dispatcher 102, the attack detection module 103 proceeds to step 21, to determine whether the received packet has been registered in the malicious packet information database 104.

When it is determined that the received packet has been registered in the malicious packet information database 104 according to the determination processing, the attack detection module 103 proceeds to step 22, to determine whether to transfer the registered information to another device. When the registered information has not been transferred, the attack detection module 103 determines to "transfer", and when the registered information has been transferred already, the attack detection module 103 determines "not to transfer". When having determined to transfer the information to another device, the attack detection module 103 proceeds to step 23 to notify a collaboration message including the registered information to the device collaboration control 107, and returns to step 20.

On the other hand, when having determined that the registered information is not transferred to another device, the attack detection module 103 immediately returns to step 20 without performing the processing at step 23.

When it is determined that the received packet is not registered in the malicious packet information database 104 at step 21, the attack detection module 103 proceeds to step 24 to determine whether the received packet is a malicious packet.

When it is determined that the received packet is a malicious packet according to the determination processing, the attack detection module 103 proceeds to step 25, where the attack detection module 103 generates malicious packet information, and registers the generated malicious packet information in the malicious packet information database 104. Subsequently at step 26, the attack detection module 103 notifies the device collaboration control 107 of a registration message including the malicious packet information, and then returns to step 20.

On the other hand, when it is determined that the received packet is not a malicious packet at step 24, the attack detection module 103 returns to step 20 without performing the processing at steps 25 and 26.

Upon reception of the packet from the packet dispatcher 102, if the received packet is registered in the malicious packet information database 104 and it is necessary to transfer the malicious packet information to another device, the attack detection module 103 notifies the device collaboration control 107 of the collaboration message. If the received packet is not registered in the malicious packet information database 104 and the received packet is a malicious packet, the attack detection module 103 generates malicious packet information and registers it in the malicious packet information database 104, and then notifies the device collaboration control 107 of the registration message.

The processing executed by the attack mitigation module 105 will be explained according to the processing flow in Fig. 7.

As shown in the processing flow in Fig. 7, upon reception of the packet from the packet dispatcher 102 at step 30, the attack mitigation module 105 proceeds to step 31 to specify the entry information fitted for the received packet to be stored in the malicious packet information database 104.

Subsequently, after applying the mitigation method stored in the specified entry information to the received packet at step 32, the attack mitigation module 105 determines whether it is necessary to transfer the packet at step 33. When it is necessary to transfer the packet, the attack mitigation module 105 proceeds to step 34 to transfer the received packet having subjected to the mitigation method to the network interface 101.

Thus, when having received the packet from the packet dispatcher 102, the attack mitigation module 105 applies the attack mitigation method to the received packet and transfers the packet to the network interface 101.

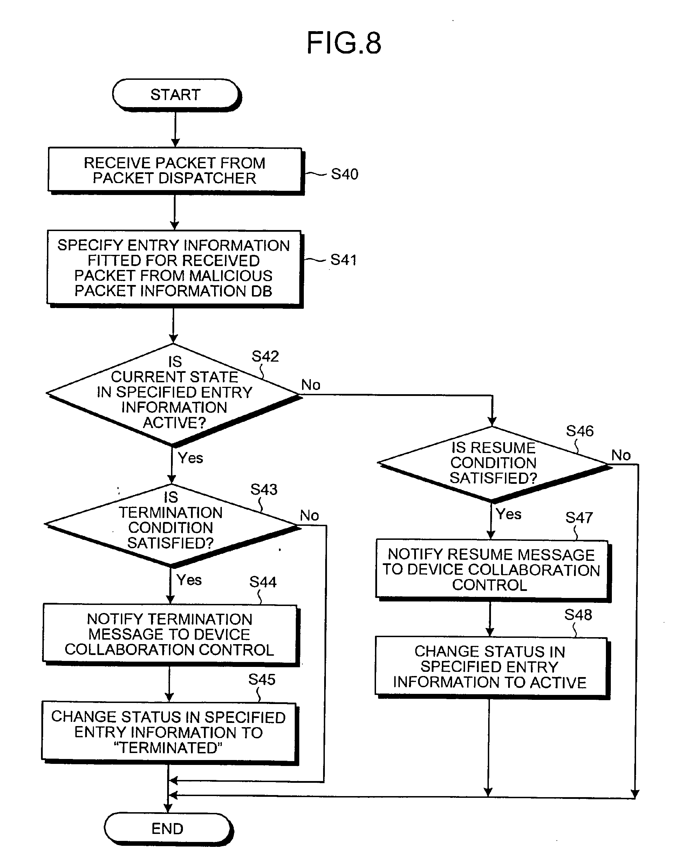

The processing executed by the terminate/resume control 106 will be explained according to the processing flow in Fig. 8.

As shown in the processing flow in Fig. 8, upon reception of a packet (a malicious packet registered in the malicious packet information database 104) from the packet dispatcher 102, the terminate/resume control 106 proceeds to step 41 to specify the entry information fitted for the received packet to be stored in the malicious packet information database 104. Subsequently at step 42, the terminate/resume control 106 determines whether the status information recorded in the specified entry information is active.

According to the determination processing, when it is determined whether the status information recorded in the specified entry information fitted for the received packet is active, the terminate/resume control 106 proceeds to step 43, to determine whether the termination condition recorded in the entry information is satisfied. If the termination condition is satisfied, the terminate/resume control 106 proceeds to step 44 to notify a termination message to the device collaboration control 107.

Subsequently at step 45, the terminate/resume control 106 changes the status information recorded in the specified entry information from "active" to "terminated", to update the malicious packet information database 104, and finish the processing.

On the other hand, at step 43, when it is determined that the termination condition recorded in the entry information fitted for the received packet is not satisfied, the terminate/resume control 106 immediately finishes the processing, without performing the processing at steps 44 and 45.

At step 42, when it is determined that the status information recorded in the specified entry information fitted for the received packet is not active, that is, it is terminated, the terminate/resume control 106 proceeds to step 46, to determine whether the resume condition recorded in the entry information is satisfied. When the resume condition is satisfied, the terminate/resume control 106 proceeds to step 47, to notify a resume message to the device collaboration control 107.

Subsequently at step 48, the terminate/resume control 106 changes the status information recorded in the specified entry information from "terminated" to "active", to update the malicious packet information database 104, and finish the processing.

On the other hand, at step 41, when it is determined that the resume condition recorded in the entry information fitted for the received packet is not satisfied, the terminate/resume control 106 immediately finishes the processing, without performing the processing at steps 47 and 48.

Thus, upon reception of the malicious packet registered in the malicious packet information database 104 from the packet dispatcher 102, when the mitigation method is active (is being executed), the terminate/resume control 106 determines whether the termination condition is satisfied. When the termination condition is satisfied, the terminate/resume control 106 notifies a termination message to the device collaboration control 107. On the other hand, when the mitigation method is terminated, the terminate/resume control 106 determines whether the resume condition is satisfied. When the resume condition is satisfied, the terminate/resume control 106 notifies a resume message to the device collaboration control 107.

The processing executed by the device collaboration control 107 will be explained according to the processing flow in Figs. 9 and 10.

As shown in the processing flow in Figs. 9 and 10, when it is determined that a termination message is transmitted from another device at step 50 (by executing the processing at step 54 by the device collaboration control 107 included in the other device), the device collaboration control 107 searches the device collaboration control database 108 using the malicious packet information included in the received termination message as a search key at step 51, to specify the relevant entry information to be stored in the device collaboration control database 108, and changes the status of the destination (the device having transmitted the termination message) to be recorded in the specified entry information from "active" to "finish" (equivalent to termination).

Subsequently at step 52, the device collaboration control 107 determines whether the status of the destination (including the status of the own device) recorded in the specified entry information is all turned to "finish". When it is determined that the status is all "finish", the device collaboration control 107 proceeds to step 53 to determine whether the destination information has been registered in the specified entry information.

According to the determination processing at steps 52 and 53, when the status of the destination (including the status of the own device) recorded in the specified entry information is all turned to "finish" and the sender information is registered in the entry information, the device collaboration control 107 proceeds to step 54 to newly create a finish message including the malicious packet information to be recorded in the entry information, and transfers the created finish message to the device registered in the sender information.

When having finished transfer of the finish message, the device collaboration control 107 deletes the entry information from the device collaboration control database 108 at step 55.

Thus, the device collaboration control 107 executes the processing at steps 50 to 55 when the finish message is received from another device. Therefore, when the finish message has been received from all devices, to which the own device has transmitted the malicious packet information (devices located on the forefront side of the defense line than the own device), and the own device finishes the mitigation measure, the device collaboration control 107 transmits the finish message to the device that has transmitted the malicious packet information to the own device (the sender device), and deletes the entry information relating to the malicious packet information from the device collaboration control database 108.

On the other hand, when it is determined that the termination message is transmitted from the terminate/resume control 106 at step 56, the device collaboration control 107 searches the malicious packet information database 104 using the malicious packet information included in the received termination message as a search key at step 57, to specify the relevant entry information, and deletes the specified entry information from the malicious packet information database 104. By this deletion processing, the mitigation measure is terminated (finishes).

Subsequently at step 58, the device collaboration control 107 searches the device collaboration control database 108 using the malicious packet information included in the received termination message as a search key, to specify the relevant entry information to be stored in the device collaboration control database 108, and changes the status of the corresponding destination (the own device when this route is used) to be recorded in the specified entry information from "active" to "finish".

Subsequently at step 52, the device collaboration control 107 determines whether the status of the destination (including the status of the own device) to be recorded in the specified entry information is all turned to "finish". When it is determined that the status of the destination is all turned to "finish", the device collaboration control 107 proceeds to step 53 to determine whether the sender information has been registered in the specified entry information.

According to the determination processing at steps 52 and 53, when the status of the destination (including the status of the own device) to be recorded in the specified entry information is all turned to "finish", and the sender information has been registered in the specified entry information, the device collaboration control 107 proceeds to step 54, where the device collaboration control 107 newly generates a finish message including the malicious packet information to be recorded in the entry information, and transmits the generated finish message to the device registered in the sender information.

When having transmitted the finish message, the device collaboration control 107 deletes the entry information from the device collaboration control database 108 at step 55.

Thus, the device collaboration control 107 executes the processing at steps 56 to 58 and steps 52 to 55 when the termination message is received from the terminate/resume control 106 of the own device.
Accordingly, when the finish message has been received from all devices, to which the own device has transmitted the malicious packet information (devices located on the forefront side of the defense line than the own device), and the own device finishes the mitigation measure, the device collaboration control 107 transmits the finish message to the device that has transmitted the malicious packet information to the own device (the sender device), and deletes the entry information relating to the malicious packet information from the device collaboration control database 108.

On the other hand, when it is determined that a collaboration message is transmitted (by executing the processing at step 65 by the device collaboration control 107 included in another device) from the other device at step 59, the device collaboration control 107 registers the malicious packet information included in the received collaboration message and information in which the sender of the received collaboration message is set as the sender information in the device collaboration control database 108 at step 60.

Subsequently at step 61, the device collaboration control 107 registers the malicious packet information in the malicious packet information database 104.

Thus, the device collaboration control 107 executes the processing at steps 59 to 61, thereby registering new device collaboration information in the device collaboration control database 108 based on the collaboration messages transmitted from other devices, and registering new malicious packet information in the malicious packet information database 104.

On the other hand, at step 62, when it is determined that a registration message is transmitted from the attack detection module 103, the device collaboration control 107 registers the malicious packet information included in the received registration message in the device collaboration control database 108 at step 63.

Thus, the device collaboration control 107 executes the processing at steps 62 to 63, thereby registering the new malicious packet information in the device collaboration control database 108 based on the registration message transmitted from the attack detection module 103.

On the other hand, at step 64, when it is determined that a collaboration message is transmitted from the attack detection module 103, the device collaboration control 107 transfers the received collaboration message to another device.

Subsequently at step 66, the device collaboration control 107 searches the device collaboration control database 108 using the malicious packet information included in the received collaboration message as a search key to specify the relevant entry information, and updates the device collaboration control database 108 by writing the information of the other device having transmitted the collaboration message additionally in the sender information to be recorded in the specified entry information.

Thus, the device collaboration control 107 executes the processing at steps 64 to 66, thereby transmitting the collaboration message transmitted from the attack detection module 103 to another device, and updating the device collaboration information stored in the device collaboration control database 108 based on the collaboration message.

On the other hand, when it is determined that a resume message is transmitted from the terminate/resume control 106 at step 67, the device collaboration control 107 searches the device collaboration control database 108 using the malicious packet information included in the received resume message as a search key to specify the relevant entry information, and changes the status of the own device in the sender information to be registered in the specified entry information from "finish" to "active".

Subsequently at step 69, the device collaboration control 107 registers the malicious packet information included in the received resume message in the malicious packet information database 104.

Thus, the device collaboration control 107 executes the processing at steps 67 to 69, thereby executing re-execution of the mitigation measure against the attack.

Thus, according to the present invention, even if the respective network attack mitigation devices perform autonomous determination to terminate the attack mitigation by performing the termination processing of the attack mitigation, the range in which the device performing the attack mitigation and the device preparing for resume of the attack are present can be converged without forming a weak point in the protected network. When the attack is resumed, the device in course of convergence can immediately perform the mitigation measure against the attack, and the device notifies the attack information again to other devices, thereby enlarging the defense range.

The network attack mitigation method of the present invention realized by the operation of the respective processors can be also realized by a computer program. The computer program is provided by recording on an appropriate recording medium or via a network, and is installed and operated on a controller such as a CPU at the time of executing the present invention, thereby realizing the invention.

## Claims

1. A network attack mitigation method of defending an attack on network attack mitigation device from an attacker device that includes sending unnecessary packets performed against devices on a network or against the network, in collaboration with a plurality of other network attack mitigation devices, comprising:
determining whether it is necessary to prepare for resume of the attack when a mitigation measure against the attack is terminated in response to the termination of the attack, based on whether a first network attack mitigation device located nearer to the attacker device than the network attack mitigation device is now performing a mitigation measure against the attack, or is preparing for resume of the attack, or has terminated the mitigation measure against the attack and returned to a normal state;
deleting information relating to the attack and causing the network attack mitigation device to return to a normal state, when it is determined at the determining that it is not necessary to prepare for resume of the attack; and
preparing for resume of the attack without deleting the information relating to the attack, when it is determined at the determining that it is necessary to prepare for resume of the attack.

2. The network attack mitigation method according to claim 1, wherein the determining includes determining whether it is necessary to prepare for resume of the attack according to whether there is the first network attack mitigation device located nearer the attacker device than the network attack mitigation device.

3. The network attack mitigation method according to claim 1 or 2, further comprising notifying the information relating to the attack to other network attack mitigation device located nearer the attacker device than the network attack mitigation device as a mitigation measure against the attack, wherein
the determining includes determining whether it is necessary to prepare for resume of the attack, based on whether the other network attack mitigation device, as a destination of the attack information, has returned to the normal state.

4. The network attack mitigation method according to claim 3, wherein the determining includes determining that it is not necessary to prepare for resume of the attack, when all other network attack mitigation devices, as destinations of the attack information, have returned to the normal state.

5. The network attack mitigation method according to claim 3 or 4, further comprising notifying return to the normal state to the other network attack mitigation devices, as the destinations of the information relating to the attack, when the network attack mitigation device deletes the attack information and returns to the normal state, wherein
upon reception of the notification indicating that the network attack mitigation device has returned to the normal state from all of other network attack mitigation devices as the destinations of the attack information, the determining includes determining that it is not necessary to prepare for resume of the attack.

6. A network attack mitigation device that defends an attack from an attacker device of sending unnecessary packets performed against devices on a network or against the network, in collaboration with a plurality of other network attack mitigation devices, comprising:
a determination unit that determines whether it is necessary to prepare for resume of the attack when a mitigation measure against the attack is terminated in response to the termination of the attack, based on whether a first network attack mitigation device located nearer to the attacker device than the network attack mitigation device is now performing a mitigation measure against the attack, or is preparing for resume of the attack, or has terminated the mitigation measure against the attack and returned to a normal state;
a return unit that deletes information relating to the attack and causes the network attack mitigation device to return to a normal state, when the determination unit determines that it is not necessary to prepare for resume of the attack; and
a resume preparing unit that prepares for resume of the attack without deleting the information relating to the attack, when the determination unit determines that it is necessary to prepare for resume of the attack.

7. The network attack mitigation device according to claim 6, wherein the determination unit determines whether it is necessary to prepare for resume of the attack according to whether there is the first network attack mitigation device located nearer the attacker device than the network attack mitigation device.

8. The network attack mitigation device according to claim 6 or 7, further comprising an attack notification unit that notifies the information relating to the attack to other network attack mitigation device located nearer the attacker device than the network attack mitigation device as a mitigation measure against the attack, wherein
the determination unit determines whether it is necessary to prepare for resume of the attack, based on whether the other network attack mitigation device, as a destination of the attack information, has returned to the normal state.

9. The network attack mitigation device according to claim 8, wherein the determination unit determines that it is not necessary to prepare for resume of the attack, when all other network attack mitigation devices, as destinations of the attack information, have returned to the normal state.

10. The network attack mitigation device according to claim 8 or 9, further comprising a return notification unit that notifies return to the normal state to the other network attack mitigation devices as the destinations of the information relating to the attack, when the network attack mitigation device deletes the attack information and returns to the normal state, wherein
upon reception of the notification indicating that the network attack mitigation device has returned to the normal state from all of other network attack mitigation devices as the destinations of the attack information, the determination unit determines that it is not necessary to prepare for resume of the attack.

11. A network attack mitigation program that implements a network attack mitigation method of defending an attack on network attack mitigation device from an attacker device that includes sending unnecessary packets performed against devices on a network or against the network, in collaboration with a plurality of other network attack mitigation devices, the computer program causing the network attack mitigation device to execute:
determining whether it is necessary to prepare for resume of the attack when a mitigation measure against the attack is terminated in response to the termination of the attack, based on whether a first network attack mitigation device located nearer to the attacker device than the network attack mitigation device is now performing a mitigation measure against the attack, or is preparing for resume of the attack, or has terminated the mitigation measure against the attack and returned to a normal state;
deleting information relating to the attack and causing the network attack mitigation device to return to a normal state, when it is determined at the determining that it is not necessary to prepare for resume of the attack; and
preparing for resume of the attack without deleting the information relating to the attack, when it is determined at the determining that it is necessary to prepare for resume of the attack.

12. The network attack mitigation program according to claim 11, wherein the determining includes determining whether it is necessary to prepare for resume of the attack according to whether there is the first network attack mitigation device located nearer the attacker device than the network attack mitigation device.

13. The network attack mitigation program according to claim 11 or 12, further causing the network attack mitigation device to execute notifying the information relating to the attack to other network attack mitigation device located nearer the attacker device than the network attack mitigation device as a mitigation measure against the attack, wherein
the determining includes determining whether it is necessary to prepare for resume of the attack, based on whether the other network attack mitigation device, as a destination of the attack information, has returned to the normal state.

14. The network attack mitigation program according to claim 13, wherein the determining includes determining that it is not necessary to prepare for resume of the attack, when all other network attack mitigation devices, as destinations of the attack information, have returned to the normal state.

15. The network attack mitigation program according to claim 13 or 14, further causing the network attack mitigation device to execute notifying return to the normal state to the other network attack mitigation devices, as the destinations of the information relating to the attack, when the network attack mitigation device deletes the attack information and returns to the normal state, wherein
upon reception of the notification indicating that the network attack mitigation device has returned to the normal state from all of other network attack mitigation devices as the destinations of the attack information, the determining includes determining that it is not necessary to prepare for resume of the attack.
